# EUROPÄISCHE PATENTSCHRIFT

(11) **EP 2 230 707 B1**
(45) Veröffentlichungstag und Bekanntmachung des Hinweises auf die Patenterteilung: **23.03.2011**
(21) Anmeldenummer: 10002472.8
(22) Anmeldetag: 10.03.2010
(51) Int. Cl.: H01M 8/02

(54) **Interkonnektor einer Festelektrolyt-Hochtemperatur-Brennstoffzelle**
Interconnector of a solid electrolyte high temperature fuel cell
Inter-connecteur d'une cellule de combustible à haute température dotée d'un électrolyte solide

(30) Priorität: 12.03.2009 AT 14609 U
(43) Veröffentlichungstag der Anmeldung: 22.09.2010
(73) Patentinhaber: PLANSEE SE, 6600 Reutte (AT)
(72) Erfinder: Brandner, Marco, Dr., 878466 Oy-Mittelberg (DE); Kraussler, Wolfgang, 6671 Weißenbach (AT); Leichtfried, Gerhard, Dr., 6600 Reutte (AT); Venskutonis, Andreas, Dr., 6600 Reutte (AT)

(56) Entgegenhaltungen:
- EP-A1- 0 510 495
- WO-A1-97/35349
- WO-A2-2004/012885
- DE-A1- 19 705 874
- JP-A- 2003 027 205

## Beschreibung

Die Erfindung betrifft einen Interkonnektor einer Festelektrolyt-Hochtemperatur-Brennstoffzelle aus einer gesinterten, Sinterporen aufweisenden Chromlegierung mit Cr > 90 Gew.%, 3 bis 8 Gew.% Fe und optional 0,001 bis 2 Gew.% zumindest eines Elements der Gruppe der Seltenerdmetalle. Die Erfindung betrifft weiters ein Verfahren zur Herstellung eines Interkonnektors sowie eine Festelektrolyt-Hochtemperatur-Brennstoffzelle, die einen Interkonnektor enthält.

Der metallische Interkonnektor (auch als bipolare Platte oder Stromsammler bezeichnet) ist eine essentielle Komponente einer Festelektrolyt-Hochtemperatur-Brennstoffzelle (auch als Festoxid-Brennstoffzelle, Hochtemperatur-Brennstoffzelle oder SOFC (Solid Oxide Fuel Cell) bezeichnet).

Eine Festelektrolyt-Hochtemperatur-Brennstoffzelle wird üblicherweise bei einer Betriebstemperatur von 650°C bis 1.000°C betrieben. Der Elektrolyt besteht aus einem festen keramischen Werkstoff, der in der Lage ist, Sauerstoffionen zu leiten, für Elektronen jedoch isolierend wirkt. In K. Wincewicz, J. Cooper, "Taxonomies of SOFC material and manufacturing alternatives", Journal of Power Sources (2005) sind als Elektrolytwerkstoffe mit Yttrium, Scandium oder Kalzium dotiertes Zirkonoxid (YSZ, SSZ oder CSZ), dotiertes Lanthanoxid und dotiertes Ceroxid beschrieben. Für Kathode und Anode werden Ionen und Elektronen leitende Keramiken eingesetzt, wie beispielsweise mit Strontium dotiertes Lanthanmanganat (LSM) für die Kathode und ein Nickel-YSZ (oder SSZ, CSZ) Cermet für die Anode.

Der Interkonnektor ist zwischen den einzelnen Zellen angeordnet, wobei Zellen, optional vorhandene Kontaktschichten und Interkonnektoren zu einem Stack gestapelt werden. Der Interkonnektor verbindet die einzelnen Zellen in Serie und sammelt so die in den Zellen erzeugte Elektrizität. Zudem unterstützt er die Zellen mechanisch und sorgt für eine Trennung und Führung der Reaktionsgase auf der Anoden- und Kathodenseite. Der Interkonnektor ist sowohl oxidierendem als auch reduzierendem Milieu bei hohen Temperaturen ausgesetzt. Dies erfordert eine entsprechend hohe Korrosionsbeständigkeit. Zudem muss der thermische Ausdehnungskoeffizient des Interkonnektors von Raumtemperatur bis zur maximalen Einsatztemperatur gut an den thermischen Ausdehnungskoeffizienten des Elektrolyt-, Anoden- und Kathodenwerkstoffs angepasst sein. Weitere Forderungen sind Gasdichtheit, eine hohe, konstante Elektronenleitfähigkeit sowie eine möglichst hohe thermische Leitfähigkeit bei Einsatztemperatur.

Generell finden in verschiedensten Hochtemperaturanwendungen im Hinblick auf gute Hochtemperatur-Korrosionseigenschaften vorwiegend Aluminiumoxid und Chromoxid bildende Legierungen, teilweise mit Anteilen an Silizium, Verwendung. Aufgrund der mangelnden elektronischen Leitfähigkeit von Al₂O₃ und SiO₂ werden für Interkonnektoren in Festelektrolyt-Hochtemperatur-Brennstoffzellen bevorzugt Chromoxid bildende Legierungen vorgeschlagen. Ein sehr gut angepasstes thermisches Ausdehnungsverhalten, verbunden mit hoher Korrosionsbeständigkeit, weisen dabei Chrom-Eisen-Legierungen auf. Die Korrosionsbeständigkeit kann durch Zugabe von Yttrium weiter verbessert werden. Eine Chromlegierung mit 5 bis 50 Gew.% Fe und einem Seltenerdoxid eines Metalls aus der Gruppe Y, La, Ce, Nd mit einer Partikelgröße von 1 bis 10 µm ist in der JP-A-02258946 offenbart.

Die EP-A-0 510 495 beschreibt unter anderem einen oxiddispersionsverfestigten, wärmebeständigen, gesinterten Werkstoff, der 0,2 bis 2 Gew.% Y₂O₃ in feindisperser Form mit einer Partikelgröße von maximal 0,1 µm enthält, wobei der Matrixwerkstoff unter anderem auch aus einem Chrom-Basiswerkstoff mit 0 bis 20 Gew.% Fe und 0 bis 10 Gew.% eines Elements der Gruppe Al, Mo, W, Nb, Ta, Hf und Al-Ti bestehen kann. Fe wird zur Erhöhung der Sinterfähigkeit beigegeben. Al liegt zur Festigkeitssteigerung in ausgeschiedener intermetallischer Form in der Matrix vor. Die Herstellung erfolgt durch mechanisches Legieren, wobei als Verdichtungsprozess nur druckunterstützte Sinterprozesse angeführt sind, nämlich Heißpressen, heißisostatisches Pressen und Heißpulverextrusion.

Die EP-A-0 570 072 beschreibt eine Chromlegierung mit 0,005 bis 5 Gew.% zumindest eines Oxides der Gruppe der Seltenerdmetalle, 0,1 bis 32 Gew.% zumindest eines Metalls der Gruppe Fe, Ni und Co, bis zu 30 Gew.% zumindest eines Metalls der Gruppe Al, Ti, Zr, Hf, bis zu 10 Gew.% zumindest eines Metalls der Gruppe V, Nb, Mo, Ta, W, Re, bis zu 1 Gew.% zumindest eines Elements der Gruppe C, N, B und Si. Die Herstellung erfolgt über Pulvermischen, Pressen, Sintern, Einkannen der gesinterten Platte in Stahlblech und Warmwalzen der gekannten Platte.

Die Verwendung einer Cr-Fe Legierung für Brennstoffzellen geht erstmalig aus der US 3,516,865 hervor. Der Cr-Gehalt liegt bei 15 bis 85 Gew.%. Optional kann die Legierung Y, Hf, Zr oder Th enthalten. Die EP-A-0 578 855 beschreibt eine metallische Komponente aus einer Chromlegierung mit 3 bis 10 At.% Fe sowie 0,5 bis 5 At.% Seltenerdmetall und/oder Seltenerdmetalloxid für Festelektrolyt-Hochtemperatur-Brennstoffzellen, die mit einem keramischen Festelektrolyten aus YSZ versehen sind.

Die WO 95/026576 A1 beschreibt eine bipolare Platte aus einer chromoxidbildenden Legierung, beispielsweise Cr-5Fe-1Y₂O₃, mit einer mit Al angereicherten Oberflächenschicht im Bereich der Gaskanäle. Die mit Al angereicherte Zone wird durch Alitieren unter Bildung der intermetallischen Phasen Cr₅Al₈ oder Cr₄Al₉ hergestellt. Im Bereich der elektrischen Kontaktflächen wird die mit Al angereicherte Zone durch einen aufwändigen Schleifprozess wieder entfernt, um eine Verringerung der Leitfähigkeit durch die Bildung von Al₂O₃ zu verhindern. Im Einsatz entsteht an den Wänden der Gaskanäle Al₂O₃.

Da für die Einstellung eines definierten Strömungsverlaufs der Interkonnektor eine komplexe Oberflächengeometrie aufweist, sind pulvermetallurgische Verfahren vorteilhaft, welche die Endform ohne mechanische Nacharbeit erzeugen. So beschreibt die WO 02/055747 A1 ein pulvermetallurgisches Verfahren zur Herstellung hochdichter Formkörper aus einer Legierung mit mindestens 20 Gew.% Cr, Fe sowie einem oder mehreren zusätzlichen metallischen und/oder keramischen Legierungsanteilen, wobei der Interkonnektor unter Verwendung eines Pulveransatzes mit elementarem Chrompulver und einem Vorlegierungspulver aus Eisen und den zusätzlichen Legierungsanteilen endformnah gepresst und gesintert wird. Derartig hergestellte Interkonnektoren können ohne weitere mechanische Nacharbeit durch Löten zu einbaufertigen Interkonnektoren verbunden werden. Eine kostengünstige Fertigung ist generell eine wichtige Grundvoraussetzung für eine breite Einführung von Chromlegierungen als Interkonnektoren in Festelektrolyt-Hochtemperatur-Brennstoffzellen. Hohe Fertigungskosten resultieren aus der Verwendung von sehr reinem Chrompulver (2N5). Hauptaugenmerk wird dabei auf Elemente gelegt, welche die Leitfähigkeit der Chromoxidschicht reduzieren. Die hohe Reinheit erfordert die Verwendung hochwertiger Erze und spezieller Reinigungsverfahren. Da für eine industrielle Umsetzung der Festelektrolyt-Hochtemperatur-Brennstoffzelle eine Reduktion der Systemkosten erforderlich ist und der Interkonnektor an den Gesamtkosten einen nennenswerten Anteil besitzt, wäre die Verwendung von kostengünstigeren Pulvern vorteilhaft.

Die WO 2004/012885 A2 beschreibt ein Verfahren zur Herstellung eines Formteils, beispielsweise eines Interkonnektors, bestehend aus einem scheiben- oder plattenförmigen Grundkörper mit einer Vielzahl von noppen- und/oder stegförmigen Erhebungen, die mit geneigten Seitenflächen in den Grundkörper übergehen, durch endformnahes Pressen und Sintern pulverförmiger Ausgangsmaterialien, wobei die Formgebung in einem zweistufigen Pressvorgang erfolgt. Ein pulvermetallurgisches Verfahren, das zu Bauteilen mit Endkontur führt, ist nur bei geringem bis moderatem Sinterschwund möglich, da ein hoher Sinterschwund aufgrund von Schwankungen der physikalischen Pulvereigenschaften nicht mit ausreichender Konstanz einstellbar ist. Zudem ist eine Restporosität nach dem Sintervorgang günstig für den zweiten, die Endkontur gebenden Pressschritt.

Nach der WO 2004/012885 A2 hergestellte Bauteile weisen daher eine Restporosität auf. Es ist nun bekannt, Sinterporen unter Bildung eines Oxids des Matrixwerkstoffes zu füllen. Dieser Prozess wird bei Produkten aus Sinterstahl Brünieren genannt. Dabei wird der gesinterte Bauteil in Wasserdampf unter Temperatur so behandelt, dass die Sinterporen mit Fe₂O₃ gefüllt werden. Ein Füllen der Sinterporen mit einem artgleichen Oxid kann auch bei Chromlegierungen angewandt werden. Es ist jedoch dabei nachteilig, dass das Füllen der Sinterporen von außen nach innen abläuft, wodurch mit der Prozesszeit die Sauerstoffpermeabilität in das Innere des Interkonnektors und damit ein gleichmäßiges Füllen zentrumsnaher Poren behindert wird. Zudem weist ein Interkonnektor typischerweise auf der Oberfläche eine Noppen- und/oder Stegstruktur auf, was unterschiedliche örtliche Wandstärken bedingt. Auch dies erschwert einen kostengünstigen und sicheren Prozess.

Aufgabe der gegenständlichen Erfindung ist es daher, einen Interkonnektor und ein Verfahren zur Herstellung eines Interkonnektors bereitzustellen, der einen an die Keramikkomponenten angepassten thermischen Ausdehnungskoeffizienten, eine hohe Formbeständigkeit, eine hohe Korrosionsbeständigkeit sowohl im reduzierenden als auch oxidierenden Milieu, eine hohe elektrische Leitfähigkeit im Bereich der Kontaktflächen zur Anode und Kathode sowie eine hohe Gasdichtheit aufweist und mit niedrigen Kosten hergestellt werden kann. Weiters ist es Aufgabe der Erfindung, eine Festelektrolyt-Hochtemperatur-Brennstoffzelle bereitzustellen, die einen aus stabilisiertem Zirkonoxid bestehenden keramischen Festelektrolyten und einen Interkonnektor mit dem zuvor genannten Eigenschaftsprofil umfasst.

Die Aufgabe der Erfindung wird durch einen Interkonnektor gemäß Anspruch 1, eine Festelektrolyt-Hochtemperatur-Brennstoffzelle gemäß Anspruch 11 und durch ein Verfahren zur Herstellung eines Interkonnektors gemäß Anspruch 12 gelöst.

Der Interkonnektor besteht dabei aus einer gesinterten Chromlegierung mit einem Chromgehalt von > 90 Gew.%, 3 bis 8 Gew.% Fe und optional 0,001 bis 2 Gew.% zumindest eines Elements der Gruppe der Seltenerdmetalle. Die Chromlegierung enthält 0,1 bis 2 Gew.% Al, wobei vorzugsweise mehr als 80 %, bevorzugt mehr als 90 % und besonders bevorzugt mehr als 99 % des Al in Form einer oxidischen, auch Cr enthaltenden Verbindung vorliegt. Der Rest des Al, wenn vorhanden, liegt in gelöster Form, in Form einer nichtoxidischen Verbindung oder in Form einer intermetallischen Phase vor. Vorzugsweise liegt der Gehalt an gelöstem Al bei kleiner 200 µg/g, bevorzugt bei kleiner 100 µg/g und besonders bevorzugt bei kleiner 50 µg/g.

Bei der Bestimmung des Al Gehaltes wird unabhängig von der Bindungsform der Gesamt-Al-Gehalt im Interkonnektor berücksichtigt. Liegt der Al-Gehalt in der Chromlegierung unter 0,1 Gew.% wird nicht ausreichend Al in die Al und Cr enthaltende oxidische Verbindung eingebaut. Liegt der Al-Gehalt über 2 Gew.%, so bilden sich verstärkt auch an der Korngrenzen und im Korninneren Al enthaltende oxidische Ausscheidungen aus. Der bevorzugte Gehalt an Aluminium in der Chromlegierung beträgt 0,15 bis 0,5 Gew.%.

Die gesinterte Chromlegierung enthält weiters Sinterporen, vorzugsweise 2 bis 20 Vol.%, bevorzugt 4 bis 15 Vol.%, wobei diese Sinterporen zumindest teilweise mit der Al und Cr enthaltenden oxidischen Verbindung gefüllt sind. Eine geringere Porosität kann nur durch einen hohen Sinterschwund erzielt werden. Ein hoher Sinterschwund erschwert die Einstellung enger Maßtoleranzen. Können enge Maßtoleranzen nicht erreicht werden, ist ein aufwändiges mechanisches Nacharbeiten erforderlich. Bei einem Interkonnektor mit einer Restporosität größer 20 Vol.% ist keine ausreichende Festigkeit und Stabilität des Bauteils gegeben. Zudem kann auch durch ein Füllen der Sinterporen mit der Al und Cr enthaltenden oxidischen Komponente keine ausreichend hohe Gasdichtheit erzielt werden.

Das Füllen der Sinterporen mit der Al und Cr enthaltenden oxidischen Verbindung erfolgt durch eine Oxidationsbehandlung des gesinterten Bauteils. Die Oxidationsbehandlung kann dabei als separater Prozessschritt erfolgen oder in den Sinterprozess integriert sein. Das Auffüllen der Sinterporen erfolgt gleichmäßig und damit in einfacher und prozesszuverlässiger Art und Weise. Es bilden sich dabei Aluminium- und Chrom-haltige Oxide hauptsächlich im Bereich der Sinterporen und nur zu einem geringen Anteil an den Korngrenzen und im Korninneren. Die sich auf der äußeren Oberfläche des Interkonnektors bildende Oxidschicht enthält bevorzugt zumindest 90 Gew.% Chromoxid. Besonders bevorzugt enthält die äußere Oxidschicht zumindest 95 Gew.% Chromoxid. Bevorzugt liegt der Al-Gehalt in der äußeren Oxidschicht unter der Nachweisgrenze üblicher Analyseverfahren (0,1 bis 1 Gew.%). Das Chromoxid liegt dabei bevorzugt als Cr₂O₃ vor. Es bildet sich damit oberflächlich eine sehr gut leitende Oxidschicht aus. Dies gilt sowohl für eine Oxidschicht, die sich durch die Oxidationsbehandlung beim Herstellprozess, als auch im Langzeiteinsatz bildet. Damit ist es grundsätzlich nicht erforderlich, die durch die Oxidationsbehandlung beim Herstellprozess gebildete Oxidschicht zu entfernen. Wird eine metallisch blanke Oberfläche angestrebt, kann die Oxidschicht beispielsweise durch einen Strahlprozess entfernt werden.

Bevorzugt liegt der Anteil der Al- und Cr-haltigen oxidischen Verbindung (bezogen auf den Gesamtgehalt der Al- und Cr-haltigen oxidischen Verbindung) in den Sinterporen bei größer 65 Vol.%, an den Korngrenzen bei kleiner 20 Vol.% und im Korninneren bei kleiner 15 Vol.%. Besonders bevorzugt liegt der Anteil der Al- und Cr-haltigen oxidischen Verbindung (bezogen auf den Gesamtgehalt der Al- und Cr-haltigen oxidischen Verbindung) in den Sinterporen bei größer 85 Vol.%, an den Korngrenzen bei kleiner 10 Vol.% und im Korninneren bei kleiner 5 Vol.%.

Vorteilhaft weist die Al- und Cr-haltige oxidische Verbindung ein mittleres Al / Cr Verhältnis (Gehalte jeweils in At.%) von größer 1 auf. Ein bevorzugtes mittleres Al / Cr Verhältnis liegt bei größer 2 und ein besonders bevorzugtes Al / Cr Verhältnis bei größer 5. Wie im Ausführungsbeispiel beschrieben, konnte ein Al / Cr Verhältnis von bis zu 8,6 gemessen werden.

Vorteilhafterweise erfolgt die Oxidationsbehandlung des Bauteils bei einer Temperatur T, mit 700°C < T < 1.200°C. Unterhalb 700°C ist die Reaktionsgeschwindigkeit gering. Oberhalb 1.200°C bildet sich bereits in nennenswertem Ausmaß sechswertiges Chromoxid.

Durch die Ausbildung der Al- und Cr-haltigen oxidischen Verbindung ist ein gleichmäßiges Füllen der Poren über den Querschnitt des Interkonnektors gewährleistet. Damit werden eine weitere innere Oxidation und ein Ausdehnen des Interkonnektors während des Betriebes der Festelektrolyt-Hochtemperatur-Brennstoffzelle vermieden. Somit ist gewährleistet, dass es beim Betrieb der Festelektrolyt-Hochtemperatur-Brennstoffzelle zu keiner Beschädigung, wie zum Beispiel Bruch, der keramischen Zellbauteile im Stackverbund kommt.

Die Al und Cr enthaltende oxidische Verbindung besteht bevorzugt aus Al, Cr und O, Rest typische Verunreinigungen. Vorteilhaft ist es dabei, wenn die Al und Cr enthaltende oxidische Verbindung als Mischoxid vorliegt. In diesem Zusammenhang wird unter Mischoxid nicht nur ein Oxid verstanden, in dem die einzelnen Komponenten vollständig ineinander gelöst vorliegen, sondern auch solche Oxide, bei denen mit hochauflösenden Analyseverfahren, wie beispielsweise analytischem TEM, die einzelnen Komponenten nicht mehr getrennt auflösbar sind. Als bevorzugte oxidische Verbindung ist dabei ein xAl₂O₃·yCr₂O₃ zu nennen. Die bevorzugten Stöchiometriefaktoren x und y ergeben sich dabei aus den zuvor genannten Al / Cr Werten. Um eine ausreichende Gasdichtheit und Formstabilität des Interkonnektors während der gesamten Betriebsdauer der Festelektrolyt-Hochtemperatur-Brennstoffzelle zu gewährleisten, ist es vorteilhaft, wenn zumindest 50 % des Gesamtsinterporenvolumens der Chromlegierung mit der Al und Cr enthaltenden oxidischen Verbindung gefüllt sind. Die 50 Vol.% stellen dabei einen mittleren Wert dar. Es können dabei einzelne Poren mit einem geringeren Volumengehalt an oxidischer Verbindung gefüllt sein, ohne dass die Funktionsfähigkeit des Bauteils dadurch beeinträchtigt wird. Poren mit einem geringeren Füllgrad sind insbesondere solche, die keine offene Verbindung zur Oberfläche aufweisen. Diese Poren bleiben jedoch auch im Langzeiteinsatz stabil und sind daher sowohl für die Gasdichtheit als auch für die Formbeständigkeit unkritisch. Bevorzugt liegt das mit der Al und Cr enthaltenden oxidischen Verbindung gefüllte Gesamtsinterporenvolumen bei größer 75 %, besonders bevorzugt bei größer 90 %.

Durch die Oxidationsbehandlung bildet sich vorzugsweise mehr als 80 %, bevorzugt mehr als 90 % und besonders bevorzugt mehr als 99 % des in der Chromlegierung enthaltenen Aluminiums in Form der oxidischen Verbindung aus. Es ist dabei nicht von Belang, in welcher Form das Al im Pulveransatz vorliegt. So können beispielsweise Chrom-Pulver verarbeitet werden, bei denen Al als Al₂0₃, als metallisches Al oder metallisches Al und Al₂0₃ vorliegt.

Für das Korrosionsverhalten der Chromlegierung ist es weiters vorteilhaft, wenn diese 0,001 bis 2 Gew.% zumindest eines Elements der Gruppe der Seltenerdmetalle enthält. Die Seltenerdmetalle können dabei in gelöster oder gebundener Form, vorzugsweise in oxidischer Form, vorliegen. Die besten Resultate können erzielt werden, wenn die Legierung 0,005 bis 0,5 Gew.% Yttrium enthält. Yttrium kann in gelöster metallischer Form und / oder in Form von Yttriumoxid und / oder in Form von Yttriummischoxid vorliegen. Als bevorzugte Yttriummischoxide sind solche aus Basis von Al-Y und / oder Al-Cr-Y zu nennen. Die Zugabe von Yttrium ist auch für das Einhalten enger Maßtoleranzen vorteilhaft, da Yttrium die Sinterfähigkeit der Chromlegierung reduziert. Dies ist insofern von Bedeutung, da es damit möglich ist, bei hohen Temperaturen zu sintern, ohne dass dabei nennenswerter Sinterschwund auftritt. Ein hoher Sinterschwund würde sich zwar günstig auf die Gasdichtheit und die Korrosionsbeständigkeit des Interkonnektors auswirken, hätte jedoch einen negativen Einfluss auf die Möglichkeit endkonturnahe Bauteile herzustellen. Durch die hohe Sintertemperatur kann eine ausgezeichnete Homogenisierung der Chromlegierung erreicht werden. Es ist davon auszugehen, dass durch Y-haltige Ausscheidungen sowohl die Korngrenzendiffusionsgeschwindigkeit, als auch die Leerstellenerzeugung durch Quergleiten von Versetzungen erniedrigt werden.

Weiters kann die Chromlegierung bis 3 Gew.% von weiteren in der Chromlegierung nicht löslichen Komponenten und bis 1 Gew.% von weiteren in der Chromlegierung löslichen Komponenten enthalten, ohne dass die Einsatzeigenschaften unzulässig verschlechtert werden. Bevorzugt liegt der Gehalt an weiteren nicht löslichen Komponenten bei < 1 Gew.% und der der Gehalt an weiteren löslichen Komponenten bei < 0,1 Gew.%. Als Beispiel für eine nicht lösliche Komponente ist Si zu nennen.

Vorzugsweise weist daher die Chromlegierung folgende Zusammensetzung auf:
- Cr > 90 Gew.%;
- 3 bis 8 Gew.% Fe;
- 0,1 bis 2 Gew.% Al;
- Optional 0,001 bis 2 Gew.% zumindest eines Elements der Gruppe der Seltenerdmetalle;
- Optional bis 3 Gew.% zumindest einer weiteren in der Chromlegierung nicht löslichen Komponente;
- Optional bis 1 Gew.% zumindest einer weiteren in der Chromlegierung löslichen Komponente;
- Rest Sauerstoff und Verunreinigungen.

Bevorzugt weist die Chromlegierung folgende Zusammensetzung auf:
- Cr > 90 Gew.%;
- 3 bis 8 Gew.% Fe;
- 0,1 bis 2 Gew.% Al;
- Optional 0,001 bis 2 Gew.% zumindest eines Elements der Gruppe der Seltenerdmetalle;
- Optional bis 1 Gew.% zumindest einer weiteren in der Chromlegierung nicht löslichen Komponente;
- Optional bis 0,1 Gew.% zumindest einer weiteren in der Chromlegierung löslichen Komponente;
- Rest Sauerstoff und Verunreinigungen.

Besonders bevorzugt weist die Chromlegierung folgende Zusammensetzung auf:
- Cr > 90 Gew.%;
- 3 bis 8 Gew.% Fe;
- 0,1 bis 2 Gew.% Al;
- 0,005 bis 0,5 Gew.% Y;
- Rest Sauerstoff und Verunreinigungen.

Der erfindungsgemäße Interkonnektor kann vorteilhaft in einer Festelektrolyt-Hochtemperatur-Brennstoffzelle eingesetzt werden, die einen Festelektrolyten aus stabilisiertem Zirkonoxid aufweist. Das Zirkonoxid kann dabei gemäß dem Stand der Technik mit Yttrium, Kalzium oder Scandium stabilisiert sein. Als Kathode können die üblichen keramischen Kathodenwerkstoffe, wie beispielsweise mit Strontium dotiertes Lanthanmanganat, verwendet werden. Auch bei der Anode kann auf bewährte Werkstoffe, wie beispielsweise Cermet-Werkstoffe bestehend aus Nickel und stabilisiertem Zirkonoxid, zurückgegriffen werden.

Bei der Herstellung der Interkonnektoren kann unter anderem auf die pulvermetallurgischen Verfahren oder einzelne Verfahrensschritte, wie in der WO 02/055747 A1 und/oder der WO 2004/012885 A2 beschrieben, zurückgegriffen werden. Als Cr Pulver eignet sich besonders Pulver mit einer laseroptisch gemessenen Korngröße von < 200 µm, bevorzugt von < 160 µm. Das Cr Pulver enthält bevorzugt Al in metallischer Form und gebunden als Al₂O₃. Der Al Gehalt (Summe metallisches und gebundenes Al) liegt bevorzugt bei 2.000 bis 10.000 µg/g, der Si-Gehalt bei < 700 µg/g. Bevorzugt wird weiters ein elementares Fe Pulver oder ein Fe-Y Vorlegierungspulver verwendet. Das Fe-Y Vorlegierungspulver wird bevorzugt durch einen Verdüsungsprozess hergestellt. Es können jedoch auch Cr-Fe oder Cr-Fe-Y Vorlegierungspulver verwendet werden. Die einzelnen Pulverbestandteile werden unter Zugabe eines üblichen Presshilfsmittels in Zwangs- oder Diffusionsmischern gemischt. Der gemischte Pulveransatz wird in eine Pressmatrize gefüllt und bei einem Pressdruck p, mit 500 < p < 1000 MPa, formgebend verdichtet. Nach dem Pressvorgang erfolgt ein Sinterschritt in reduzierender Atmosphäre bei einer Temperatur T, mit 1200°C < T < Solidus Temperatur. Dabei erfolgt das Entbindern des Grünlings als integrativer Bestandteil des Sinterschritts oder als separater Prozessschritt.

Alternativ kann nach dem Pressen der Grünling bevorzugt bei einer Temperatur T, mit 700°C < T < 1200°C, in reduzierender Atmosphäre vorgesintert werden. Dabei erfolgt das Entbindern des Grünlings als integrativer Bestandteil des Vorsinterschritts oder als separater Prozessschritt. Der vorgesinterte Teil wird einem Nachpressen bei einem Pressdruck p, mit 500 < p < 1000 MPa, unterzogen. Das Nachpressen ist als Kalibrierpressen ausgeführt und erzeugt die Endkontur des Interkonnektors. Da durch den Vorsinterprozess die Festigkeit der Chromlegierung reduziert wird, kann durch den Nachpressvorgang eine weitere Verdichtung erreicht werden. Nach dem Nachpressvorgang erfolgt ein Sinterschritt in reduzierender Atmosphäre bei einer Temperatur T, mit 1200°C < T < Solidus Temperatur. Bevorzugt kann dieser zweistufige Pressvorgang gemäß dem in der WO 2004/012885 offenbarten Verfahren erfolgen.

In einem nächsten Schritt wird der Bauteil einer oxidierenden Behandlung bevorzugt bei einer Temperatur T, mit 700°C < T < 1.200°C unterzogen. Die oxidierende Behandlung kann dabei beispielsweise an Luft oder Sauerstoff erfolgen. Die Behandlungszeit wird bevorzugt so gewählt, dass bei einer gravimetrischen Untersuchung > 85 % der bei der jeweiligen Temperatur sich bei einer Oxidationszeit von 24 h einstellenden Gewichtszunahme erzielt wird. In einem weiteren Prozessschritt kann der oxidierte Bauteil einem Sandstrahlprozess unterzogen werden, wodurch die auf der Oberfläche vorliegenden Oxide entfernt werden.

Die bevorzugte Herstellmethode kann damit folgendermaßen zusammengefasst werden:
- Herstellen eines Pulveransatzes unter Verwendung von gemischtem, teilweise vorlegiertem und/oder vollständig vorlegiertem Pulver;
- Formgebendes Matrizenpressen mit einem Pressdruck p, mit 500 < p < 1000 MPa;
- Optional Vorsintern bei einer Temperatur T, mit 700°C < T < 1200°C in reduzierender Atmosphäre und optional Kalibrierpressen bei einem Pressdruck p, mit 500 < p < 1000 MPa;
- Sintern bei einer Temperatur T, mit 1200°C < T < Solidus Temperatur in reduzierender Atmosphäre;
- Oxidierende Behandlung bevorzugt bei einer Temperatur T, mit 700°C < T < 1.200°C;
- Optional Sandstrahlen

Die Formgebung des Interkonnektors kann auch durch andere geeignete Verfahren, wie beispielsweise Metallpulverspritzguss, erfolgen. Auch Pulvergießen und Pulverextrusion gefolgt von einem Prägeschritt sind geeignete Herstellverfahren.

Im Folgenden wird die Erfindung durch ein Herstellungsbeispiel näher erläutert.

Beispiel:
- Figur 1:: Gesinterter, oxidierter Interkonnektor gemäß Herstellbeispiel, Zentrumsprobe, TEM Hellfeldbild, Sinterpore gefüllt mit Al- und Cr-haltigem Oxid, gekennzeichnete EDX Analysepunkte.
- Figur 2:: Gesinterter, oxidierter Interkonnektor gemäß Herstellbeispiel, Randprobe, TEM Hellfeldbild, äußere Oxidschicht, gekennzeichnete EDX Analysepunkte.
- Figur 3:: EDX Spektrum für Analysepunkt "Base (1)" gemäß Figur 1 (Al- und Cr-haltiges Oxid in Sinterpore).
- Figur 4:: EDX Spektrum für Matrixwerkstoff, Zentrumsprobe.
- Figur 5:: EDX Spektrum für Analysepunkt "Base (8)" gemäß Figur 2 (äußere Oxidschicht).

Ein scheibenförmiger Interkonnektor mit einem Durchmesser von 120 mm, einer Gesamtdicke von 2,5 mm und einem Durchmesser der Mittelbohrung von 8,8 mm mit auf einer Seite des Grundkörpers stegförmigen Erhebungen mit etwa 0,5 mm Höhe und 5 mm Breite sowie auf der gegenüber liegenden Seite angeordneten stegförmigen Erhebungen mit etwa 0,7 mm Höhe und 5 mm Breite, dazwischen in regelmäßigen Abständen und Reihen angeordneten noppenförmigen Erhebungen wurde mit Endkontur hergestellt. Dafür wurde zunächst ein Pulveransatz bestehend aus 95 Gew.% Chrompulver mit einem Al-Gehalt von 0,181 Gew.% sowie 5 Gew.% eines Vorlegierungspulvers aus Eisen mit 0,05 Gew.% Yttrium unter Zugabe von 1 Gew.% Mikrowachs als Presshilfsmittel angefertigt. Die verwendeten Pulver wiesen Korngrößen im Bereich von 36 bis 160 µm auf. Der Pulveransatz wurde formgebend durch Matrizenpressen mit 800 MPa verdichtet. Danach wurde der Grünling bei 1.000°C 3 Stunden in Wasserstoff vorgesintert. Das Kalibrierpressen des vorgesinterten Bauteils erfolgte in einem zweiten Presswerkzeug. Dabei wurde die Matrize maßlich derart angepasst, dass nach dem zweiten Pressschritt der Interkonnektor die Endform aufwies. Die Ausgestaltung der Presswerkzeuge erfolgte gemäß der WO 2004/012885 A2. Danach wurde der Bauteil bei 1.450°C 2 Stunden in Wasserstoff gesintert.

Anschließend wurde der Bauteil einer Voroxidation unterzogen, wobei diese bei einer Temperatur von 950°C für 18 Stunden an Luft erfolgte.

Der so hergestellte Interkonnektor wies eine mittlere Dichte von 6,61 g/cm³ (Mittelwert aus 15 Proben) auf. Zentrumsproben (bezogen auf den Querschnitt des Interkonnektors) randnahe und Randproben wurden mittels Ionendünnen (FIB - Focused Ion Beam) für die Untersuchung an einem analytischem TEM (Philips CM-20) präpariert. Die Analyse erfolgte mittels energiedispersiver Röntgenanalyse (EDX). Die morphologische Untersuchung wurde an einem Rasterelektronenmikroskop durchgeführt, mit dem Ergebnis, dass die Poren gleichmäßig mit Oxid gefüllt sind.

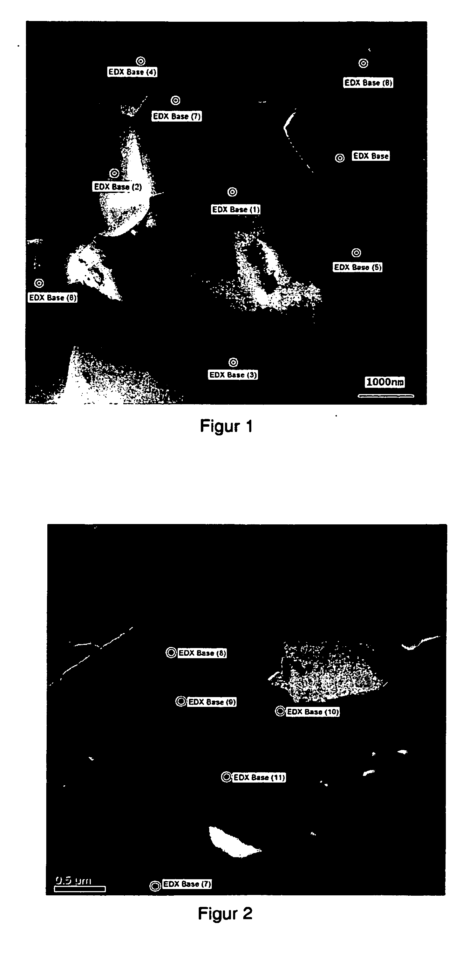

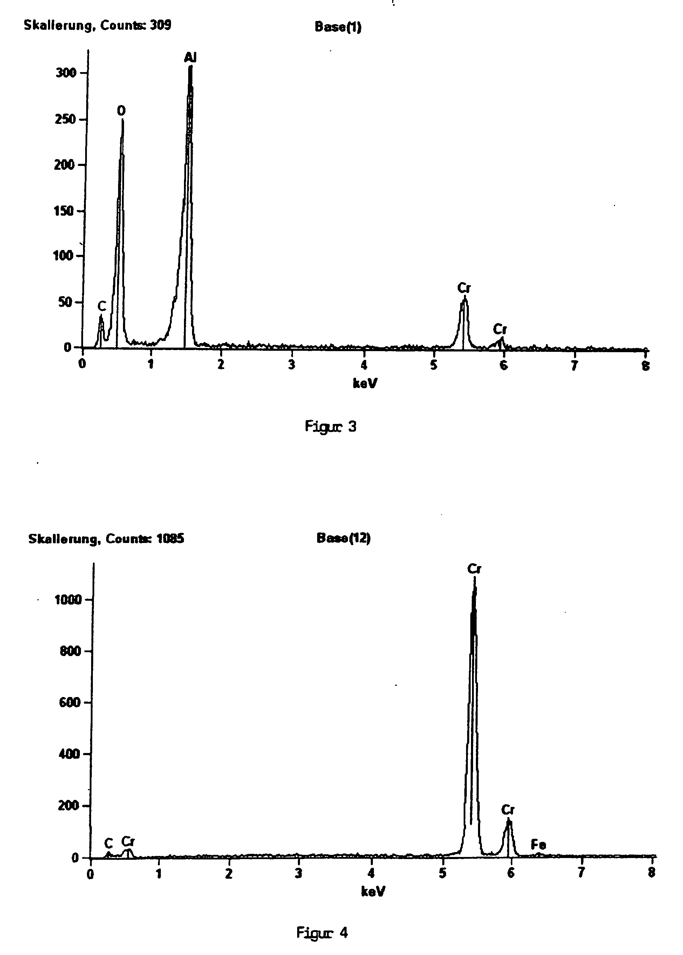

Im Folgenden sind die Ergebnisse der translektronenmikroskopischen Untersuchung und EDX Analysen zusammengefasst. Figur 1 zeigt eine mit Oxid gefüllte Sinterpore. Es liegen dabei einzelne Oxidteilchen vor, die miteinander verbunden sind. In Figur 2 ist die Oxidschicht im Bereich der Randzone wiedergegeben. Die Oxidschichtdicke beträgt ca. 6 µm. Figur 3 zeigt das EDX Spektrum eines Oxidteilchen, das sich in der Sinterpore gebildet hat. Das Oxid ist aus Al, Cr und O gebildet. Der C-Peak ist ein Messartefakt. Das Elementmapping löst Al und Cr nicht getrennt auf. Nach der in der Beschreibung wiedergegebenen Definition handelt es sich daher um ein

Al-Cr Mischoxid. Das berechnete Al / Cr (At.% / At.%) Verhältnis beträgt 6,9. Die weitere Untersuchung von Oxidteilchen in Sinterporen erbrachte in jedem Fall ein Al-reiches Al-Cr Mischoxid, wobei der niedrigste Al / Cr (At.% / At.%) Wert bei 4,7 und der höchste Al / Cr (At.% / At.%) Wert bei 8,6 liegt. Vereinzelt konnten auch Oxide an den Korngrenzen und im Korninneren detektiert werden, wobei diese ebenfalls Al und Cr mit einem hohen Al / Cr Verhältnis aufwiesen. Figur 4 gibt das EDX Spektrum für einen Messpunkt im Bereich des Matrixwerkstoffs wieder. Der Al-Gehalt des Matrixwerkstoffs ist durch die Oxidationsbehandlung unter der Nachweisgrenze. Der Matrixwerkstoff enthält nur Cr und Fe entsprechend der Legierungszusammensetzung. Der C-Peak ist wiederum ein Messartefakt.

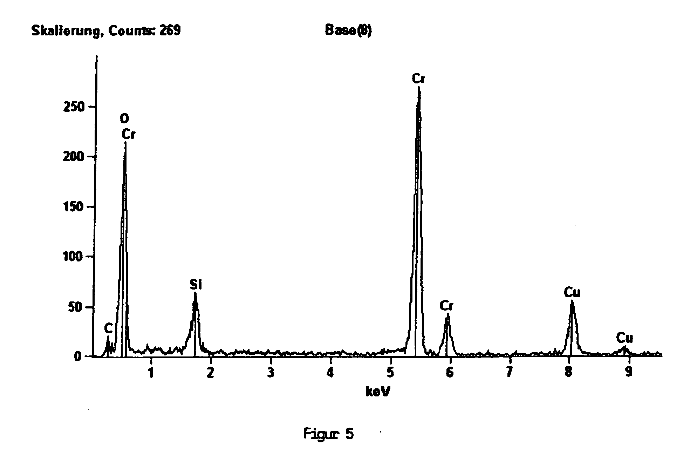

Figur 5 zeigt das EDX Spektrum der äußeren Oxidschicht. Die Oxidschicht enthält kein Al. Neben Cr und O ist nur noch Si detektierbar. Das verwendete Cr Pulver wies einen Si-Gehalt von 0,052 Gew.% auf.

Der Si Gehalt wirkt sich dabei nicht nachteilig auf das Langzeitverhalten aus. Die Cu und C Peaks sind Messartefakte.

Die erfindungsgemäßen Interkonnektoren weisen eine ausgezeichnete Formstabilität und eine Luft-Permeabilität von < 3x10⁻⁴ Pa auf.

## Patentansprüche

1. Interkonnektor für eine Festelektrolyt-Hochtemperatur-Brennstoffzelle aus einer gesinterten, Sinterporen aufweisenden Chromlegierung mit Cr > 90 Gew.%; 3 bis 8 Gew.% Fe; und optional 0,001 bis 2 Gew.% zumindest eines Elements der Gruppe der Seltenerdmetalle;
**dadurch gekennzeichnet,**
**dass** die Chromlegierung 0,1 bis 2 Gew.% Al enthält, wobei die Sinterporen zumindest teilweise mit einer Al und Cr enthaltenden oxidischen Verbindung gefüllt sind.

2. Interkonnektor nach Anspruch 1, **dadurch gekennzeichnet, dass** das Al / Cr (At.% / At.%) Verhältnis der Al und Cr enthaltenden oxidischen Verbindung größer 1 beträgt.

3. Interkonnektor nach Anspruch 2, **dadurch gekennzeichnet, dass** das Al / Cr (At.% / At.%) Al Verhältnis der Al und Cr enthaltenden oxidischen Verbindung größer 2 beträgt.

4. Interkonnektor nach einem der Ansprüche 1 bis 3, **dadurch gekennzeichnet, dass** die Al und Cr enthaltende oxidische Verbindung ein Al-Cr Mischoxid ist.

5. Interkonnektor nach einem der Ansprüche 1 bis 4, **dadurch gekennzeichnet, dass** die Al und Cr enthaltende oxidische Verbindung ein xAl₂O₃·yCr₂O₃ ist.

6. Interkonnektor nach einem der Ansprüche 1 bis 5, **dadurch gekennzeichnet, dass** die Chromlegierung 2 bis 20 Vol.% Sinterporen enthält.

7. Interkonnektor nach einem der Ansprüche 1 bis 6, **dadurch gekennzeichnet, dass** zumindest 50 Vol.% des Gesamtsinterporenvolumens der Chromlegierung mit der Al und Cr enthaltenden oxidischen Verbindung gefüllt ist.

8. Interkonnektor nach einem der Ansprüche 1 bis 7, **dadurch gekennzeichnet, dass** < 0,05 Gew.% Al in der Matrix der Chromlegierung gelöst ist und / oder als intermetallische Phase vorliegt.

9. Interkonnektor nach einem der Ansprüche 1 bis 8, **dadurch gekennzeichnet, dass** die Chromlegierung 0,005 bis 0,5 Gew.% Y enthält.

10. Interkonnektor nach einem der Ansprüche 1 bis 9, **dadurch gekennzeichnet, dass** die äußere Oberfläche oxidfrei ist oder eine Oxidschicht aufweist, die zumindest 90 Gew.% Chromoxid enthält.

11. Festelektrolyt-Hochtemperatur-Brennstoffzelle, die einen aus stabilisiertem Zirkonoxid bestehenden keramischen Festelektrolyten und einen Interkonnektor nach einem der Ansprüche 1 bis 10 umfasst.

12. Verfahren zur Herstellung eines Interkonnektors nach einem der Ansprüche 1 bis 10, **dadurch gekennzeichnet, dass** dieses die folgenden Verfahrenschritte umfasst:
- Herstellen eines Pulveransatzes unter Verwendung von gemischtem, teilweise vorlegiertem und/oder vollständig vorlegiertem Pulver;
- Formgebendes Matrizenpressen mit einem Pressdruck p, mit 500 < p < 1000 MPa;
- Optional Vorsintern bei einer Temperatur T, mit 700°C < T < 1200°C in reduzierender Atmosphäre und optional Kalibrierpressen bei einem Pressdruck p, mit 500 < p < 1000 MPa;
- Sintern bei einer Temperatur T, mit 1200°C < T < Solidus Temperatur in reduzierender Atmosphäre;
- Oxidierende Behandlung bevorzugt bei einer Temperatur T, mit 700°C<T<1.200°C;
- Optional Sandstrahlen.

## Claims

1. Interconnector for a high-temperature solid electrolyte fuel cell composed of a sintered chromium alloy which has sintering pores and contains > 90% by weight of Cr, from 3 to 8% by weight of Fe and optionally from 0.001 to 2% by weight of at least one element of the group of rare earth metals;
**characterized in that** the chromium alloy contains from 0.1 to 2% by weight of Al, with the sintering pores being at least partly filled with an oxidic compound containing Al and Cr.

2. Interconnector according to Claim 1, **characterized in that** the Al/Cr (atom%/atom%) ratio of the oxidic compound containing Al and Cr is greater than 1.

3. Interconnector according to Claim 2, **characterized in that** the Al/Cr (atom%/atom%) ratio of the oxidic compound containing Al and Cr is greater than 2.

4. Interconnector according to any of Claims 1 to 3, **characterized in that** the oxidic compound containing Al and Cr is an Al-Cr mixed oxide.

5. Interconnector according to any of Claims 1 to 4, **characterized in that** the oxidic compound containing Al and Cr is an xAl₂O₃·yCr₂O₃.

6. Interconnector according to any of Claims 1 to 5, **characterized in that** the chromium alloy contains from 2 to 20% by volume of sintering pores.

7. Interconnector according to any of Claims 1 to 6, **characterized in that** at least 50% by volume of the total sintering pore volume of the chromium alloy is filled with the oxidic compound containing Al and Cr.

8. Interconnector according to any of Claims 1 to 7, **characterized in that** < 0.05% by weight of Al is dissolved in the matrix of the chromium alloy and/or present as intermetallic phase.

9. Interconnector according to any of Claims 1 to 8, **characterized in that** the chromium alloy contains from 0.005 to 0.5% by weight of Y.

10. Interconnector according to any of Claims 1 to 9, **characterized in that** the outer surface is oxide-free or has an oxide layer containing at least 90% by weight of chromium oxide.

11. High-temperature solid electrolyte fuel cell which comprises a ceramic solid electrolyte comprising stabilized zirconium oxide and an interconnector according to any of Claims 1 to 10.

12. Process for producing an interconnector according to any of Claims 1 to 10, **characterized in that** it comprises the following process steps:
- production of a powder mix using mixed, partly prealloyed and/or fully prealloyed powder;
- shaping by die pressing at a pressing pressure p such that 500 < p < 1000 MPa;
- optionally presintering at a temperature T such that 700°C < T < 1200°C in a reducing atmosphere and optionally calibration pressing at a pressing pressure p such that 500 < p < 1000 MPa;
- sintering at a temperature T such that 1200°C < T < solidus temperature in a reducing atmosphere;
- oxidative treatment preferably at a temperature T such that 700°C < T < 1200°C;
- optionally sandblasting

## Revendications

1. Interconnecteur pour pile à combustible à haute température à électrolyte solide, en alliage de chrome fritté présentant des pores de frittage et contenant > 90% en poids de Cr, 3 à 8% en poids de Fe, et facultativement 0,001 à 2% en poids d'au moins un élément du groupe des métaux des terres rares,
**caractérisé en ce que**
l'alliage de chrome contient 0,1 à 2% en poids d'Al, les pores de frittage étant remplis au moins en partie par un composé formé par voie d'oxydation, contenant de l'Al et du Cr.

2. Interconnecteur selon la revendication 1, **caractérisé en ce que** le rapport Al/Cr (At.%/ At.%) entre l'Al et le Cr du composé formé par voie d'oxydation, contenant de l'Al et du Cr, est supérieur à 1.

3. Interconnecteur selon la revendication 2, **caractérisé en ce que** le rapport Al/Cr (At.%/ At.%) entre l'Al et le Cr du composé formé par voie d'oxydation, contenant de l'Al et du Cr, est supérieur à 2.

4. Interconnecteur selon l'une quelconque des revendications précédentes, **caractérisé en ce que** le composé formé par voie d'oxydation, contenant de l'Al et du Cr, est un oxyde mixte d'Al et de Cr.

5. Interconnecteur selon l'une quelconque des revendications précédentes, **caractérisé en ce que** le composé formé par voie d'oxydation, contenant de l'Al et du Cr, est xAl₂O₃·yCr₂O₃.

6. Interconnecteur selon l'une quelconque des revendications précédentes, **caractérisé en ce que** l'alliage de chrome contient 2 à 20% en volume de pores de frittage.

7. Interconnecteur selon l'une quelconque des revendications précédentes, **caractérisé en ce qu'**au moins 50% en volume du volume total de pores de frittage de l'alliage de Chrome est rempli du composé formé par voie d'oxydation, contenant de l'Al et du Cr.

8. Interconnecteur selon l'une quelconque des revendications précédentes, **caractérisé en ce que** <0,05% en poids d'Al est dissous dans la matrice de l'alliage de chrome et/ou présent sous la forme de phase intermétallique.

9. Interconnecteur selon l'une quelconque des revendications précédentes, **caractérisé en ce que** l'alliage de chrome contient 0,005 à 0,5% en poids d'Y.

10. Interconnecteur selon l'une quelconque des revendications précédentes, **caractérisé en ce que** la surface externe est exempte d'oxydes ou présente une couche d'oxyde qui contient au moins 90% en poids d'oxyde de chrome.

11. Pile à combustible à haute température à électrolyte solide, qui comprend un électrolyte solide céramique, constitué d'un oxyde de zinc stabilisé, et un interconnecteur selon l'une quelconque des revendications précédentes.

12. Procédé de fabrication d'un interconnecteur selon l'une quelconque des revendications 1 à 10, **caractérisé par** les étampes suivantes:
fabrication d'une préparation pulvérulente par utilisation de poudre mélangée, partiellement pré-alliée et/ou totalement pré-alliée;
compression de façonnage en matrice sous une pression de compression p, où 500 < p < 1.000 MPa;
pré-frittage facultatif sous atmosphère réductrice à une température T, où 700°C < T < 1.200 °C et compression facultative de calibrage sous une pression de compression p, où 500 < p < 1.000 MPa;
frittage sous atmosphère réductrice à une température T, où 1.200 °C < T < température de solidus;
traitement oxydant de préférence à une température T, où 700°C <T< 1.200 °C;
sablage facultatif de décapage.
